# EUROPEAN PATENT APPLICATION

(11) **EP 4 752 559 A1**
(43) Date of publication of application: **03.06.2026**
(21) Application number: 25178428.6
(22) Date of filing: 23.05.2025
(51) Int. Cl.: G01P 1/02, B60G 17/019, G01D 11/24

(54) **WHEEL SPEED AND ACCELEROMETER SENSOR**

(30) Priority: 29.11.2024 CN 202411748998
(71) Applicant: BeijingWest Industries Co. Ltd., 102400 Beijing (CN)
(72) Inventor: FANELLI, Dominique Louis, 95570 21 rue des Tanneurs, Bouffemont (FR); HAUCK, Frederic, 93300 81 Rue des Cites, Aubervilliers (FR)
(74) Representative: Lukaszyk, Szymon

(57) **Abstract**

A sensor assembly configured for use in a vehicle suspension system. The sensor assembly including a main body, a nose, a first sensor, and a second sensor. The main body defining a first receptacle and including a first end and a second end. The nose extending from the main body and defining a second receptacle. The first sensor disposed in the first receptacle and configured to measure a first vehicle characteristic of the vehicle suspension system. The second sensor disposed in the second receptacle and configured to measure a second vehicle characteristic, and the second vehicle characteristic being different than the first vehicle characteristic.

## Description

### Technical Field

The present disclosure relates to vehicle wheel systems, particularly sensors for vehicle wheel systems.

### Background of the Invention

Certain vehicles systems may include one or more sensors configured to monitor the operation of one or more vehicle components, such as rotational speed of one or more of the wheels or dynamic movement of one or more of the vehicle suspension components.

### Summary of the invention

The present disclosure provides a sensor assembly configured for use in a vehicle suspension system. The sensor assembly may include a main body, a nose, a first sensor, and a second sensor. The main body may define a first receptacle and may include a first end and a second end. The nose may extend from the main body and the nose may define a receptacle. The first sensor may be disposed in the first receptacle and may be configured to measure a first vehicle characteristic of the vehicle suspension system. The second sensor may be disposed in the second receptacle and may be configured to measure a second vehicle characteristic, and the second vehicle characteristic may different than the first vehicle characteristic.

In one aspect, the first sensor is an accelerometer and the first vehicle characteristic of the vehicle suspension system is an acceleration of at least one component of the vehicle suspension system.

According to another aspect of this disclosure, a sensor assembly for use in a vehicle suspension system is provided. The vehicle suspension system may include at least one vehicle wheel and the sensor assembly may include a housing, an accelerometer, and a wheel speed sensor. The housing may be configured for attachment to at least one component of the vehicle suspension system unsprung mass. The accelerometer may be disposed within the housing and configured to measure acceleration of the at least one vehicle component part of unsprung mass as the at least one vehicle component is displaced with respect to at least one direction. The wheel speed sensor may be disposed in the housing and configured to measure rotational speed of the at least one vehicle wheel.

According to another aspect of this disclosure, a knuckle assembly for use in a vehicle suspension system is provided. The knuckle assembly may include a knuckle and a sensor assembly. The knuckle may include a knuckle body and one or more arms extending from the main body. The one or more arms may be configured for attachment to one or more components of the vehicle suspension system. The knuckle body may be provided with a cylindrical portion defining a wheel carrier aperture and the wheel carrier aperture may define a rotational axis of a vehicle wheel. The sensor assembly may be provided with a housing, an accelerometer, and a wheel speed sensor. The housing may be configured for attachment to the knuckle body and the accelerometer may be disposed in the housing and configured to measure acceleration of the knuckle body as the knuckle body moves with respect to at least one direction. The wheel speed sensor may be disposed in the housing and configured to measure a rotational speed of the vehicle wheel.

### Brief description of the drawings

FIG. 1 illustrates a top schematic view of a portion of a vehicle suspension system and a sensor assembly according to one or more embodiments.
FIG. 2 illustrates a perspective of an integrated accelerometer and wheel speed sensor.
FIG. 3 illustrates a top view of the integrated accelerometer and wheel speed sensor.
FIG. 4 illustrates a perspective-exploded view of an exemplary knuckle assembly for use in a vehicle.
FIGS. 4A and 4B illustrate detail views of a portion of a knuckle body taken along dashed lines in FIG. 4.
FIG. 5A and FIG. 5B each illustrate a schematic diagram of a vehicle suspension system and orientation of one or more sensor assembly disposed therein.

### Detailed Description

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

This invention is not limited to the specific embodiments and methods described below, as specific components and/or conditions may, of course, vary. Furthermore, the terminology used herein is used only for the purpose of describing particular embodiments of the present invention and is not intended to be limiting in any way.

As used in the specification and the appended claims, the singular form "a," "an," and "the" comprise plural referents unless the context clearly indicates otherwise. For example, reference to a component in the singular is intended to comprise a plurality of components.

The term "substantially" or "about" may be used herein to describe disclosed or claimed embodiments. The term "substantially" or "about" may modify a value or relative characteristic disclosed or claimed in the present disclosure. In such instances, "substantially" or "about" may signify that the value or relative characteristic it modifies is within ± 0%, 0.1%, 0.5%, 1%, 2%, 3%, 4%, 5% or 10% of the value or relative characteristic.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). The term "and/or" includes any and all combinations of one or more of the associated listed items.

Although the terms first, second, third, etc. may be used to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

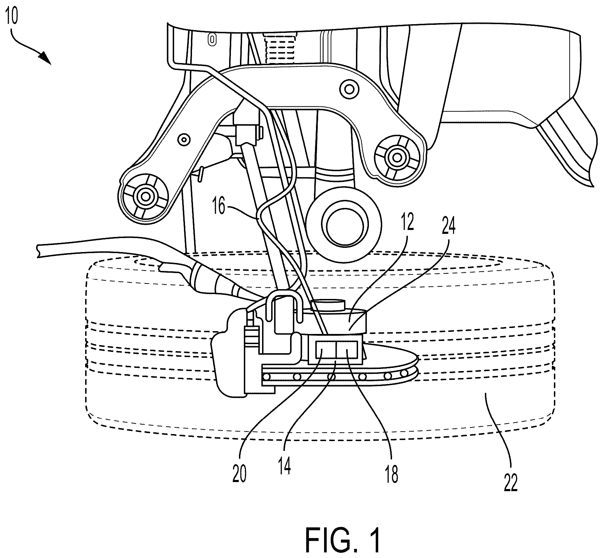

FIG. 1 shows a top view of a portion of a vehicle suspension system 10 provided with a sensor assembly 14 according to one or more embodiments. The suspension system 10 may be a steering axle provided with a knuckle 12 configured to support or carry a wheel carrier 24 that may be attached to a vehicle wheel 22. As will be described herein, the sensor assembly 14 may include one or more sensors operatively connected to a vehicle control system (not illustrated) by a single cable. The sensor assembly 14 may include an accelerometer 18 and a wheel speed sensor 20.

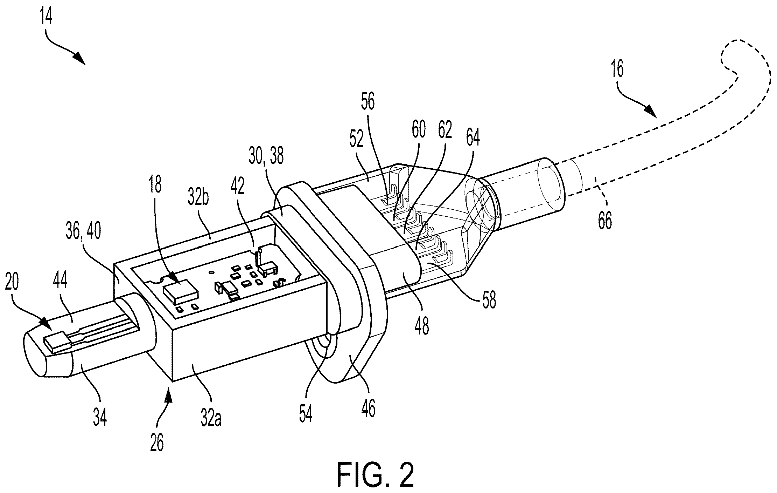

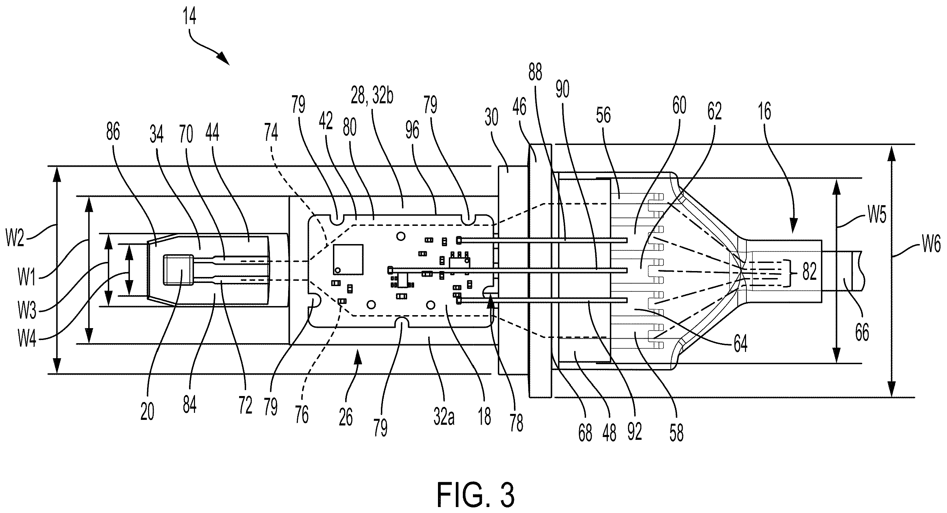

FIG. 2 shows a perspective view of the sensor assembly 14 according to one or more embodiments. The sensor assembly 14 may include a housing 26 and the cable or cable assembly 16 that may be fixed to the housing 26. The housing 26 may be provided with a main body 28 (FIG. 3) and a nose 34 that may extend from a first end 36 (e.g., front wall 40) of the main body 28. The main body 28 may include a pair of lateral sidewalls 32a, 32b that may each extend from a second end 38 of the main body 28 (e.g., a base 30) to the front wall 40. The front wall 40, lateral sidewalls 32a, 32b, and the base 30 may collectively form a first receptacle 42 that houses the accelerometer 18 and the nose 34 may define a second receptacle 44, and the wheel speed sensor 20 may be disposed in the second receptacle 44.

A flange 46 may extend from the base 30 in a thickness direction (e.g., away from the base) and in a radial direction (e.g., substantially orthogonal to the thickness direction) and the flange may define a fastener aperture 54 that may be configured to receive a fastener (not illustrated) to fix the sensor assembly 14 to the knuckle 12. The sensor assembly 14 may include one or more (e.g., five) electrical connection members such as busbars including a first wheel speed sensor busbar 56, a second wheel speed sensor busbar 58, a first accelerometer busbar 60, a second accelerometer busbar 62, and a third accelerometer busbar 64. The first and second wheel speed sensor busbars 56, 58 may be electrically connected to the wheel speed sensor 20 and the first, second, and third accelerometer busbars 60, 62, 64 may be electrically connected to the accelerometer 18. A collar 48 may extend from the base 30 and the busbars 56, 58, 60, 62, 64 may be supported by and extend through the collar 48. The cable assembly 16 may include a sheath 66 that covers one or more wires (FIG. 3) and a boot 52 that may be fixed to the sheath 66 and the collar 48. The receptacle 42 that houses the accelerometer 18 is filled or covered with a material that protect the accelerometer 18 against mechanical impact and humidity (not represented in FIG. 2).

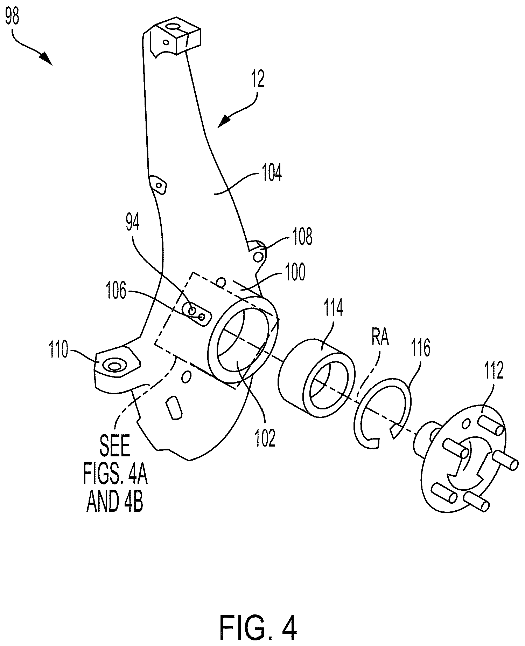

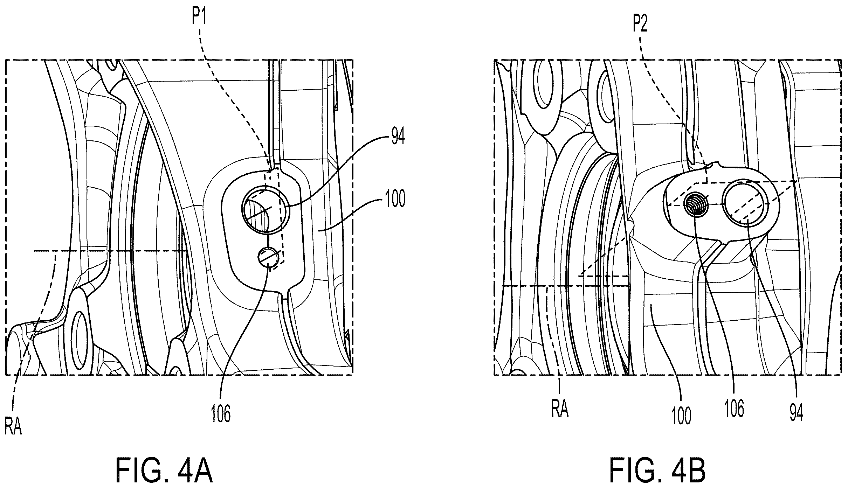

FIG. 3 shows a top view of the sensor assembly 14. Portions of the housing 26 (FIG. 2) such as the nose 34 (FIG. 2), main body 28, and/or the base 30 may be configured to be inserted into a sensor aperture 94 (FIGS. 4A and 4B). The nose 34 may be narrower than a width of the main body 28 and include a tapered portion to facilitate insertion of the nose 34 and the main body 28 into the sensor aperture 94. As an example, the lateral sidewalls 32a, 32b may be spaced apart from one another and define a first width W1 and the base 30 may have a second width W2 that may be greater than the first width W1. The nose 34 may include a first or non-tapered portion 84 that may extend from the main body 28 away from the base, and a second or tapered portion 86 that may extend from the non-tapered portion 84. The non-tapered portion 84 may define a third width W3 and the tapered portion 86 may define a fourth width W4 that may be less than the third width W3. The collar 48 (FIG. 2) may define a fifth width W5 that may be less than the second width W2 of the base 30. The flange 46 may define a sixth width W6 that may be greater than the fifth width W5.

As mentioned above, the wheel speed sensor 20 may be disposed in the second receptacle 44 defined by the nose 34. The wheel speed sensor 20 may include a first lead 70 and a second lead 72 that may extend from the wheel speed sensor 20. The leads 70, 72 themselves or other electrical connectors (e.g., wires represented by dashed lines 74, 76) may extend through the nose 34, into the main body beneath or above a circuit board 80 of the accelerometer 18 (FIG. 2) and to the first wheel speed sensor busbar 56 and the second wheel speed sensor busbar 58. The accelerometer 18 includes the circuit board 80 that may carry one or more (e.g., three) sensor nodes that may be connected to the first accelerometer busbar 60, the second accelerometer busbar 62, and the third accelerometer busbar 64 by first, second, and third accelerometer connections 88, 90, 92, respectively. The first accelerometer busbar 60, the second accelerometer busbar 62, and the third accelerometer busbar 64 and the first and second wheel speed sensor busbars 56, 58 may be connected to one or more wires 82 that may be covered by the sheath 66 of the cable assembly 16. In one or more embodiments, a protrusion 68 may be provided between the base 30 and the collar 48 and the boot 52 may be fixed to the protrusion 68.

The accelerometer 18 may contain a known, damped mass held in place by elements such as springs that measure the motion of the mass relative to the device. The deflection of the springs is measured by a method such as piezoelectric voltage, capacitance, or optical means. The higher the measured value, the greater the deflection of the mass and therefore the higher the acceleration detected. The accelerometer may also be configured to sense the orientation of the knuckle 12 and the displacement of the knuckle 12 with respect to one or more directions. An inner periphery 96 of the first receptacle 42 may include one or more retaining flanges 78 (e.g., two) that may be configured to ensure the circuit board 80 within the first receptacle 42 is inserted in right position. On the circuit board 80 may define one or more apertures or notches (e.g., two) 79 that are configured to receive the one or more retaining flanges 78. Moreover, the outer periphery of the circuit board 80 may include one or more apertures or notches (e.g., three) 79 to handle the circuit board during press fit operation.

FIG. 4 shows a perspective-exploded view of an exemplary knuckle assembly 98 according to one or more embodiments. FIGS. 4A and 4B illustrate detail views of a portion of a knuckle body 104 taken along the dashed lines in FIG. 4. FIG. 4A shows the orientation of a first mounting plane P1 for the sensor assembly 14 with respect a rotational axis RA of the vehicle wheel 22 (FIG. 1). FIG. 4B shows the orientation of a second mounting plane P2 for the sensor assembly 14 with respect a rotational axis RA of the vehicle wheel 22 (FIG. 1).

The knuckle assembly 98 may form a portion of the vehicle suspension system unsprung mass 10 (FIG. 1) and may include the knuckle 12, a wheel carrier 112, a bearing 114, and a snap ring 116. The knuckle 12 may include a knuckle body 104 that may be provided with a cylindrical portion 100 that may define a wheel carrier aperture 102. The knuckle body 104 may include one or more arms 108, 110 that may be configured for attachment to other vehicle suspension components (e.g., control arms sway arms). The wheel carrier aperture 102 may be sized to receive the bearing 114, snap ring 116, and the wheel carrier 112. The wheel carrier 112 may be configured to rotate with respect to the bearing 114 about a rotational axis RA. While the knuckle assembly 98 is shown with the bearing 114, the snap ring 116, and the wheel carrier 112, one of ordinary skill in the art would appreciate that other components (e.g., a stub axle, spindle, etc.) may be employed.

In one or more embodiments, an outer periphery of the cylindrical portion 100 may define the sensor aperture 94 and an attachment aperture 106 that may be positioned adjacent to the sensor aperture 94. The sensor aperture 94 and the attachment aperture 106 may extend through the cylindrical portion 100 towards the rotational axis RA. The attachment aperture 106 may be positioned so that once at least a portion of the sensor assembly 14 (e.g., the nose 34 and the main body 28) is inserted or disposed within the sensor aperture 94, the fastener aperture 54 may be substantially aligned with the attachment aperture 106 so that a fastener may be inserted through the fastener aperture 54 and into the attachment aperture 106 to fix the sensor assembly 14 to the knuckle body 104. FIG. 4A shows the first mounting plane P1 that may be arranged substantially orthogonal (e.g., 90°) to the rotational axis RA. FIG. 4B shows the second mounting plane P2 that may be arranged substantially parallel to the rotational axis RA.

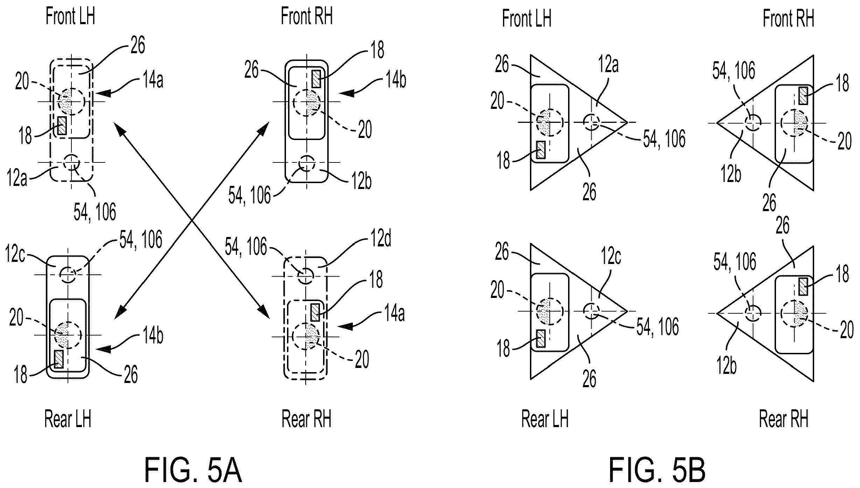

FIG. 5A and FIG. 5B each show a schematic diagram of four vehicle wheels provided with a sensor assembly 14 and arrangement of the sensor assemblies 14 with respect to the vehicle wheels. Specifically, FIG. 5A shows a sensor assembly 14 for each vehicle wheel 22 that is arranged orthogonally to the rotational axis of the vehicle wheel 22 (as shown in FIG. 4A) and FIG. 5B shows a sensor assembly 14 for each vehicle wheel 22 that is arranged parallel to the rotational axis RA (as shown in FIG. 4B).

The suspension system 10 includes a front left knuckle 12a, a front right knuckle 12b, a rear left knuckle 12c, and a rear right knuckle 12d. The arrangement of the sensor assembly 14 in a direction parallel to the rotational axis RA may allow for one sensor assembly 14 to be used for each of the knuckles 12a, 12b, 12c, 12d. Whereas, arranging the sensor assembly 14 orthogonally to the rotational axis RA may require two sensor assemblies 14a, 14b for the vehicle knuckles 12a, 12b, 12c, 12d. For the orthogonal arrangement of the sensors 14, the front left knuckle 12a and the rear right knuckle 12d may each include a first sensor assembly 14a and the front right knuckle 12b and the rear left knuckle 12c may include a second sensor assembly 14b. In all disposition the wheel speed sensor 20 must be oriented correctly to a rotating element linked to the wheel, in most of the case, the rotating ring of bearing 114.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A sensor assembly (14) for use in a vehicle suspension system, the sensor assembly (14) comprising:
a main body (28) defining a first receptacle (42), the main body (28) including a first end (36) and a second end (38);
a nose (34) extending from the main body (28) and defining a second receptacle (44);
a first sensor disposed in the first receptacle (42) and configured to measure a first vehicle characteristic of the vehicle suspension system; and
a second sensor disposed in the second receptacle (44) and configured to measure a second vehicle characteristic of the vehicle suspension system, the second vehicle characteristic different than the first vehicle characteristic.

2. The sensor assembly (14) of claim 1, wherein the first sensor is an accelerometer (18) and the first vehicle characteristic of the vehicle suspension system is an acceleration of at least one component of the vehicle suspension system.

3. The sensor assembly (14) of claim 2, wherein the vehicle suspension system includes a knuckle (12) configured to carry a vehicle wheel (22) and the first vehicle characteristic is an acceleration of the knuckle (12) with respect to one or more direction, wherein the second sensor is a wheel speed sensor (20) and the second vehicle characteristic is a rotational speed of the vehicle wheel (22).

4. The sensor assembly (14) of any one of claims 1 to 3, further comprising:
one or more first busbars extending from the second end (38) of the main body (28) and electrically connected to the first sensor; and
one or more second busbars extending from the second end (38) of the main body (28) and electrically connected to the second sensor,
particularly wherein the nose (34) extends from the first end (36) of the main body (28).

5. The sensor assembly (14) of any one of claims 1 to 4, wherein the main body (28) includes a base (30), a pair of lateral sidewalls (32a, 32b), and a front wall (40), wherein the front wall (40) forms the first end (36) of the main body (28) and the base (30) forms the second end (38) of the main body (28), wherein the pair of lateral sidewalls (32a, 32b) are spaced apart by a first width and the base (30) has a second width, and wherein the second width is greater than the first width.

6. The sensor assembly (14) of claim 5, wherein the nose (34) includes a first portion (84) and a second portion (86), the first portion (84) extending from the main body (28) and the second portion (86) extending from the first portion (84) away from the main body (28), wherein the first portion (84) of the nose (34) defines a third width and the second portion (86) of the nose (34) defines a fourth width, wherein the third width is less than the second width and the fourth width is less than the third width.

7. The sensor assembly (14) of claim 5 or 6, further comprising:
a flange (46) extending in a radial direction and in an axial direction away from the base (30), the flange (46) defining a fastener aperture (54) configured to receive a fastener to fix the sensor assembly (14) to at least one component of the vehicle suspension system.

8. The sensor assembly (14) of claim 7, wherein the at least one component is a knuckle (12) configured to carry a vehicle wheel (22), wherein the knuckle (12) defines a wheel carrier aperture (102) and a sensor aperture (94), the wheel carrier aperture (102) configured to receive a wheel carrier (112) and defining a rotational axis, the sensor aperture (94) configured to receive the nose (34), the sensor aperture (94) and the fastener aperture (54) disposed adjacent to one another, wherein a plane extending through a center of the sensor aperture (94) and a center of the fastener aperture (54) is arranged substantially orthogonal to the rotational axis.

9. The sensor assembly (14) of claim 7 or 8, further comprising:
a collar (48) extending from the flange (46), the flange (46) disposed between the base (30) and the collar (48), the collar (48) defining an electric connection receptacle;
one or more first sensor connectors extending through the electrical connection receptacle and electrically connected to the first sensor; and
one or more second sensor connectors extending through the electrical connection receptacle and electrically connected to the second sensor.

10. The sensor assembly (14) of claim 9, further comprising:
a cable assembly (16) including a wire, a sheath (66) and a boot (52), the wire disposed within the sheath (66) and the boot (52) and operatively connected to the one or more first sensor connectors and the one or more second sensor connectors, the boot (52) covering collar (48),
particularly wherein the one or more second sensor connectors are disposed between the one or more first sensor connectors.

11. The sensor assembly of claim 1, wherein the vehicle suspension system includes at least one vehicle wheel (22), the sensor assembly (14) comprising:
a housing (26) configured for attachment to at least one component of the vehicle suspension system;
wherein the first sensor is an accelerometer (18) disposed within the housing (26) and configured to measure acceleration of the at least one vehicle component as the at least one vehicle component is displaced with respect to at least one direction; and
wherein the second sensor is a wheel speed sensor (20) disposed within the housing (26) and configured to measure rotational speed of the at least one vehicle wheel (22).

12. The sensor assembly (14) of claim 11, further comprising:
a cable assembly (16) including one or more wires operatively connected to the accelerometer (18) and the wheel speed sensor (20), wherein the housing (26) includes a first end, a second end, and a medial portion extending therebetween, wherein the accelerometer (18) is disposed in the medial portion, the wheel speed sensor (20) is disposed in the first end, and the cable assembly (16) is fixed to the second end,
particularly wherein the medial portion defines a receptacle (42) and an inner periphery (96) of the receptacle (42) includes one or more retaining flanges (78), wherein the accelerometer (18) includes a circuit board (80) disposed within the receptacle, wherein the one or more retaining flanges (78) are configured to fix circuit board (80) within the receptacle (42).

13. A knuckle assembly (98) for use in a vehicle suspension system, the knuckle assembly (98) comprising:
a knuckle (12) including a knuckle body (104) and one or more arms (108, 110) extending from the knuckle body (104), the one or arms (108, 110) configured for attachment to one or more components of the vehicle suspension system, the knuckle body (104) provided with a cylindrical portion (100) defining a wheel carrier aperture (102), the wheel carrier aperture (102) defining a rotational axis of a vehicle wheel (22); and
a sensor assembly (14) according to claim 11,
wherein the housing (26) is configured for attachment to the knuckle body (104),
wherein the accelerometer (18) is configured to measure acceleration of the knuckle body (104) as the knuckle body (104) moves with respect to at least one direction.

14. The knuckle assembly (98) of claim 13, wherein the housing (26) includes a main body (28) and a nose (34), the main body (28) provided with a first end portion and a second end portion and defining a receptacle (42) extending between the first end portion and the second end portion,
wherein the nose (34) extends from the first end portion and the wheel speed sensor is disposed within the nose (34), and the accelerometer (18) is disposed within the receptacle (42),
wherein the cylindrical portion of the knuckle body (104) defines a sensor aperture (94), and wherein the nose (34) and the main body (28) of the sensor assembly is disposed within the sensor aperture (94).

15. The knuckle assembly (98) of claim 14, wherein the housing (26) is further provided with a flange (46) extending from the second end portion of the main body (28), wherein the flange (46) defines a fastener aperture (54) and the cylindrical portion defines an attachment aperture (106) adjacent to the sensor aperture (94), wherein the attachment aperture (106) and the sensor aperture (94) are each configured to receive a fastener to fix the sensor assembly (14) to the knuckle body (104),
particularly wherein the flange (46) has a triangular shape,
particularly wherein the knuckle assembly (98) further comprises:
a cable assembly (16) including a wire, a sheath (66) and a boot (52), the wire disposed within the sheath (66) and the boot (52), the wire operatively connected to the accelerometer (18) and the wheel speed sensor (20), wherein the housing (26) further includes a collar (48) extending from the flange (46) and the boot (52) covers the collar (48).
